# EUROPEAN PATENT SPECIFICATION

(11) **EP 1 887 092 B1**
(45) Date of publication and mention of the grant of the patent: **15.12.2010**
(21) Application number: 07018712.5
(22) Date of filing: 03.10.2005
(51) Int. Cl.: C22B 5/02, C01B 6/11, C01B 6/21, C01B 35/00, H01M 8/06, C22B 26/10, C22B 61/00

(54) **Preparation of boron and sodium from sodium tetrataborate by reduction**
Erzeugung von Bor und Natrium mittels Reduktion von Natriumtetraborat
Production du bore et du sodium par réduction du tétraborate du sodium

(30) Priority: 08.10.2004 US 617011 P
(43) Date of publication of application: 13.02.2008
(62) Divisional of application: 05256172.7
(73) Proprietor: ROHM AND HAAS COMPANY, Philadelphia, Pennsylvania 19106-2399 (US)
(72) Inventor: Chin, Arthur Achhing, Cherry Hill NJ 08003 (US); Lipiecki, Francis Joseph, Haddonfield New Jersey 08033 (US); Park, Won Suh, North Andover Massachusetts 01845 (US)
(74) Representative: Buckley, Guy Julian

(56) References cited:
- WO-A-03/051773
- US-A- 3 379 511
- US-B1- 6 433 129
- KOJIMA Y ET AL: "Recycling process of sodium metaborate to sodium borohydride" INTERNATIONAL JOURNAL OF HYDROGEN ENERGY, ELSEVIER SCIENCE PUBLISHERS B.V., BARKING, GB, vol. 28, no. 9, September 2003 (2003-09), pages 989-993, XP004423143 ISSN: 0360-3199

## Description

### Background

This invention relates generally to a method for preparing sodium and boron starting materials, and for production of sodium borohydride from sodium, boron and hydrogen.

Current processes for production of sodium borohydride are inefficient in that they require reactants containing four moles of sodium per mole of boron. The cost of sodium borohydride would be reduced if boron and sodium could be combined in the same 1:1 molar ratio at which they occur in the product.

WO 03/051773 discloses a process for the production of elemental boron. The process of the invention comprises subjecting a mixture of a reducible boron compound and a reducing agent to mechanical activation, whereby the boron compound is reduced to elemental boron by the reducing agent.

Sodium borohydride is a convenient source of hydrogen. However, use of sodium borohydride as a hydrogen source, for example, in fuel cell applications, generates borate salts, including sodium metaborate as byproducts. Recycle of the sodium metaborate to sodium borohydride would greatly reduce the cost of using sodium borohydride as a hydrogen source. A process for production of elemental sodium and boron from sodium metaborate would provide a source of these elements for production of sodium borohydride.

Reduction of boron oxide or tetraborate ion to boron in the presence of carbon was reported in A. Stähler & J.J. Elbert, Chemische Berichte, volume 46, page 2060 (1913). However, this reference does not disclose reduction of sodium ion to sodium, reduction of sodium metaborate, or conversion of sodium and boron to sodium borohydride. A method capable of converting a source of boron and sodium, especially sodium metaborate, to boron and sodium for production of sodium borohydride would be commercially valuable.

### Statement of Invention

The present invention is directed to a method for producing sodium and boron from sodium tetraborate.

The invention is further directed to a method for producing sodium borohydride by steps comprising: (a) allowing sodium metaborate and at least one reductant to react to form a product mixture comprising sodium and boron; and (b) allowing sodium and boron to react with hydrogen to form sodium borohydride.

In the invention, sodium tetraborate is reduced to sodium and boron with at least one of carbon and a hydrocarbon.

### Detailed Description

Unless otherwise specified, all percentages herein are stated as weight percentages and temperatures are in °C. A "transition metal" is any element in groups 3 to 12 of the IUPAC periodic table, i.e., the elements having atomic numbers 21-30, 39-48, 57-80 and 89-103.

Reductants suitable for use in the present invention include carbon and hydrocarbons. Examples of particular reductants include methane, ethane, propane, butane, Syn Gas, coal and coke. In one embodiment of the invention, the reductant is a hydrocarbon or a mixture of hydrocarbons. In one embodiment of the invention, the reductant is at least one C₁-C₄ hydrocarbon.

In the invention, sodium tetraborate is reduced with at least one of carbon and a hydrocarbon. When the reductant is methane, the process is described by the following equation:

Na₂B₄O₇ + 7CH₄ → 2Na + 7CO + 4B + 14H₂

When sodium tetraborate is reduced to sodium and boron, using carbon as a reductant, the reaction is described by the following equation:

Na₂B₄O₇ + 7C → 2Na + 7CO + 4B

Preferably, the temperature for reduction reactions forming boron and sodium in this invention is at least 1000°C. In one embodiment, the temperature is at least 1200°C. Preferably, the temperature is no higher than 1800°C. Preferably, the temperature for reaction of sodium and boron with hydrogen to produce sodium borohydride is from 300°C to 800°C, and more preferably, from 500°C to 700°C. Higher pressures favor the reduction reaction, preferably at least 30 atmospheres, more preferably at least 100 atmospheres. Conditions that favor formation of boron over formation of boron carbide are preferred.

High-temperature reactions in which a source of oxidized boron and sodium is reduced can be performed in reactors capable of handling such high temperatures, including, for example, fluid bed systems, kilns and electrochemical furnaces, such as those used in the metallurgical industry. Lower-temperature elemental synthesis of sodium borohydride can be performed as a dry process, such as a fluid bed system or a grinding system, such as a ball mill. Alternatively, an inert liquid diluent can be used to improve temperature control. Suitable inert liquids include, for example, those in which sodium borohydride is soluble and which are relatively unreactive with borohydride. A solvent in which sodium borohydride is soluble is one in which sodium borohydride is soluble at least at the level of 2%, preferably, at least 5%. Preferred solvents include liquid ammonia, alkyl amines, heterocyclic amines, alkanolamines, alkylene diamines, glycol ethers, amide solvents (e.g., heterocyclic amides and aliphatic amides), dimethyl sulfoxide and combinations thereof. Preferably, the solvent is substantially free of water, e.g., it has a water content less than 0.5%, more preferably less than 0.2%. Especially preferred solvents include ammonia, C₁-C₄ alkyl amines, pyridine, 1-methyl-2-pyrrolidone, 2-aminoethanol, ethylene diamine, ethylene glycol dimethyl ether, diethylene glycol dimethyl ether, triethylene glycol dimethyl ether, tetraethylene glycol dimethyl ether, dimethylformamide, dimethylacetamide, dimethylsulfoxide and combinations thereof. Use of a solvent also allows the reaction to be run more easily as a continuous process. Moreover, the solvent facilitates heat transfer, thereby minimizing hot spots and allowing better temperature control. Recycle of the solvent is possible to improve process economics. In another embodiment of the invention, a mineral oil is used as the solvent to allow higher reaction temperatures. Separation of sodium borohydride from the oil may be accomplished via an extraction process after the oil is removed from the reactor.

Grinding of the reactants will accelerate reactions involving solids in this invention, and may be achieved using any method which applies energy to solid particles to induce a mechanochemical reaction, especially any method which reduces solids to the micron size range, preferably the sub-micron size range, and continually exposes fresh surfaces for reaction, e.g., impact, jet or attrition milling. Preferred methods include ball milling, vibratory (including ultrasonic) milling, air classifying milling, universal/pin milling, jet (including spiral and fluidized jet) milling, rotor milling, pearl milling. Especially preferred methods are planetary ball milling, centrifugal ball milling, and similar types of high kinetic energy rotary ball milling. Preferably, milling is performed in either a hydrogen atmosphere, or an inert atmosphere, e.g., nitrogen. In an embodiment in which a solvent is used, grinding of the reactants may be achieved using any method suitable for grinding a slurry.

In one embodiment of the invention, radiation techniques are used to provide rapid heating of the reactants, including, for example, microwave power irradiation. Microwave adsorbers such as metal powders and dipolar organic liquids may be added to the reaction system to promote microwave heating. Use of radiation techniques allows high reaction rates at relatively low temperatures, and is preferred to use of resistive heating thermal techniques.

Combination of sodium and boron to produce sodium borohydride is described in the following equation:

Na + B + 2H₂ → NaBH₄

The sodium and boron can be from any source, but in the invention, they are derived from reduction of sodium tetraborate. Use of a catalyst can promote the combination of sodium and boron. Materials that catalyze surface hydride formation from gas phase hydrogen can be used to further hydriding kinetics. Examples of suitable catalysts include powders of the transition metals, and their oxides, preferably La, Sc, Ti, V, Cr, Mn, Fe, Ni, Pd, Pt and Cu; oxides of silicon and aluminum, preferably alumina and silica; and AB₂, AB₅, AB, and A₂B types of alloys, wherein A and B are transition metals, such as FeTi and LaNi₅. A comprehensive list of hydriding alloys is given at the Sandia National Laboratory website at hydpark.ca.sandia.gov/. The pressure of hydrogen preferably is from 100 kPa to 7000 kPa, more preferably from 100 kPa to 2000 kPa.

## Claims

1. A method for producing sodium and boron; said method comprising allowing sodium tetraborate to react with at least one reductant selected from carbon and hydrocarbons

2. The method of claim 1 in which said at least one reductant is at least one C₁-C₄ hydrocarbon.

## Patentansprüche

1. Verfahren zur Herstellung von Natrium und Bor, wobei das Verfahren das Erlauben, dass Natriumtetraborat mit mindestens einem Reduktionsmittel, ausgewählt aus Kohlenstoff und Kohlenwasserstoffen, reagiert, umfasst.

2. Verfahren nach Anspruch 1, in welchem das mindestens eine Reduktionmittel mindestens ein C₁-C₄ Kohlenwasserstoff ist.

## Revendications

1. Procédé pour produire du sodium et du bore ; ledit procédé comprenant la réaction du tétraborate de sodium avec au moins un réducteur choisi parmi le carbone et les hydrocarbures.

2. Procédé selon la revendication 1 où ledit au moins un réducteur est au moins un C₁-C₄ hydrocarbure.
